Europäisches Patentamt

European Patent Office

Office européen des brevets

(11) Publication number: **0 369 065**
**A1**

# EUROPEAN PATENT APPLICATION

(21) Application number: 88202575.2

(22) Date of filing: 17.11.88

(51) Int. Cl.5: **B64G 1/64, G01B 11/27**

(43) Date of publication of application:
**23.05.90 Bulletin 90/21**

(84) Designated Contracting States:
**DE FR GB IT NL**

(71) Applicant: **BRITISH AEROSPACE PUBLIC LIMITED COMPANY**
**11 Strand**
**London WC2N 5JT(GB)**

(72) Inventor: **Hinton, Jeremy Lynn British Aerospace plc**
**Sowerby Research Centre P O Box 5**
**Filton Bristol BS12 7QW(GB)**
Inventor: **Stanley, Philip Arthur British Aerospace plc**
**Sowerby Research Centre P O Box 5**
**Filton Bristol BS12 7QW(GB)**

(74) Representative: **Saul, David Jonathan et al**
**British Aerospace plc Corporate Patents Dept. Brooklands Road**
**Weybridge Surrey KT13 0SJ(GB)**

(54) Docking target.

(57) A docking target (12) for a spacecraft comprises a pedestal (14) on the end of which is marked perpendicular lines (18,19) and further perpendicular lines marked on the hull (10) of the spacecraft. During a docking maneouvre, an observer in a chaser spacecraft has a parallax cue between the elevated target and its base to aid alignment. The observer uses a viewing system having a reticle and a variable magnification capability to optimise accuracy.

Fig.2.

## DOCKING TARGET

The present invention relates to a docking target and relates particularly, but not exclusively, to a docking target for use in spacecraft docking.

It is known to provide a spacecraft having an elevated target mounted thereon so that there will be a parallax cue between the target and its base which can be made use of by an observer in a second spacecraft, sometimes known as a chaser spacecraft, approaching the first spacecraft during a docking maneouvre. It is known to use a target comprising a pedestal having a spot on one end and a circle drawn around the base of the pedestal so that, in use, an observer aims to centre the spot in the circle during the docking maneouvre.

According to the present invention we provide a docking target adapted to form part of an article adapted for docking connection with a further article, the docking target having first and second portions at different levels and configured so that an observer associated with the further article aims to align a line or contour on the first portion with a line or contour on the second portion during a docking maneouvre.

The present invention thus utilises the property of hyperacuity of the human eye.

Classical acuity, measured for instance by determining the minimum resolvable gap in a line (Snellen acuity), is limited by the image quality of the eye and the spacing of individual receptors in the receptor matrix. An approximate figure for this acuity is one minute (1$'$) of arc. Hyperacuity relates to visual accuracy which can exceed this, and the best known form of this is vernier acuity, i.e. determining the misalignment of two line segments or the break in a contour. The resolution obtainable in this task can be as good as four seconds (4$''$) of arc for foveal performance of experienced observers and is best for red or yellow/green light, not white. This is achieved because the location of a line can be determined to sub-pixel accuracy.

Preferably, the docking target comprises a projection adapted to extend from the body of the article wherein the first portion is at the end of the projection and the second portion is in the region of the base of the projection.

In the particular embodiment to be discussed, a docking target designed to exploit vernier acuity involves attaching a pedestal target on the body of a spacecraft and is designed so as to maximise the abilities of the human visual system in detecting Vernier offset resulting from parallax.

Optionally, the docking target may comprise luminous and/or retroreflective material flanking the lines or contours on the first and second portions. This feature helps improve the contrast of a line on the docking target so as to improve visibility when the docking target is in partial or full shadow or in direct sunlight.

Preferably, the docking target comprises perpendicular lines marked on the first and second portions so as to enable alignment in both the X and Y axes.

According to another aspect of the present invention we provide a viewing system having means for magnifying the docking target and means for gradually reducing said magnification as the articles approach one another.

The use of optical magnification increases sensitivity during a docking maneouvre.

Preferably, the system comprises a reticle comprising perpendicular lines for alignment with perpendicular lines on the docking target. This feature facilitates the making of corrections in the relative attitude of the two articles during a docking maneouvre.

A particular embodiment of the present invention will now be described, by way of example, with reference to the accompanying drawings in which:

Figure 1 is a diagrammatic side view of a docking target according to the present invention;

Figure 2 is a diagrammatic front view of the docking target of Figure 1;

Figures 3(a)-3(c) illustrate possible views of the docking target of Figures 1 and 2 by an observer;

Figure 4 is a diagram illustrating geometric considerations concerning pedestal length;

Figure 5 illustrates the use of luminous flanking bars;

Figure 6 (a)-6(c) illustrate the use of a reticle;

Figures 7(a)-7(d) illustrate different degrees of alignment during a docking maneouvre.

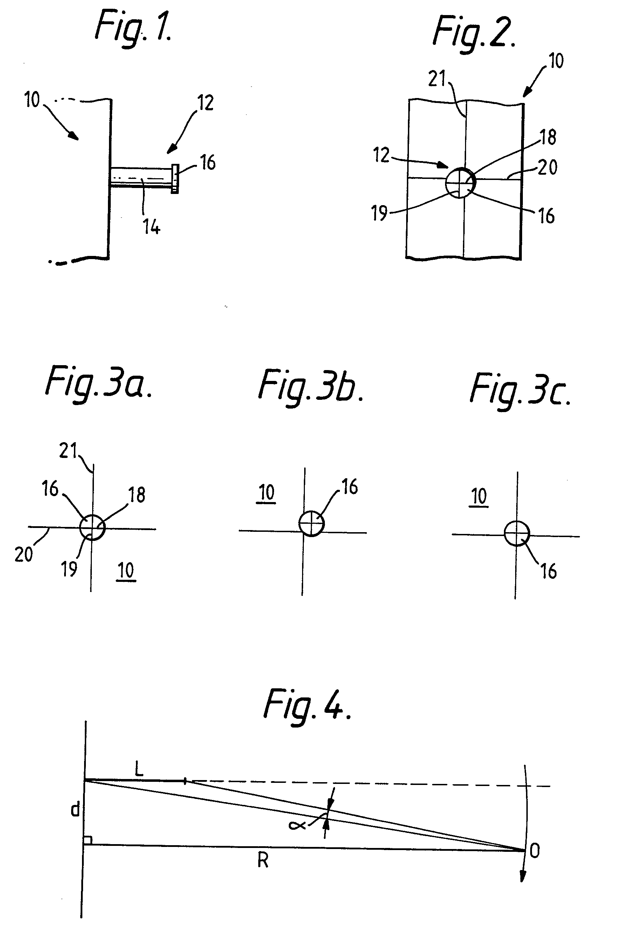

Referring to Figures 1 and 2, a portion of the hull of a spacecraft is indicated generally at 10 and a docking target is indicated generally at 12. The docking target comprises a pedestal 14 which has a flat circular head 16. The head 16 is marked with two perpendicular lines 18 and 19 and the hull 10 of the spacecraft is marked with two perpendicular lines 20 and 21.

Figure 3a shows the lines 18, 19 on the head 16 of the pedestal 14 correctly aligned with the lines 20, 21 on the hull 10 of the spacecraft which would indicate to an observer in a second spacecraft that the second spacecraft is correctly aligned with the first spacecraft for docking. Figure 3b illustrates the case where the lines on the head 16 of the pedestal 14 are misaligned with the lines on the hull 10 in both the X and Y directions. Figure 3c illustrates the case where there is a displacement in the Y direction only between the line 18 on the head 16 of the pedestal 14 and the line 20 on the hull 10 of the spacecraft.

The width and length of the lines on the target 12 and the length of the pedestal 14 will now be considered assuming that the alignment system must be of use at ranges of 100m and less, with a minimum accuracy of 0.5 degrees in orientation and attitude and a maximum deviation from the centreline of 20cm at 100m and 2cm at 10m (i.e. just over 0.1 degree).

Line Widths: Under ideal lighting conditions, a long line subtending only 0.5″ of arc at the eye can be detected. Ideal conditions and minimum detection criteria may not be applicable so a level where a line can be fully resolved i.e. classical acuity, 1′ of arc must be considered. A line subtending 1′ of arc at the eye will require a width of 2.9cm when viewed from 100m using unaided vision. Therefore a minimum line width for the docking target 12 would be approximately 3cm when viewed at maximum range assuming no system magnification. In practice, magnification will be employed so that the physical width of the lines may be reduced proportionately (allowing for system image quality) but the recommendation that lines subtend at least 1′ of arc at the eye will remain.

Line Length: As an estimate, a line length on the head 16 and on the hull 10 of at least 10′ of arc at the eye would be required for maximal acuity. This would require the head 16 to have a diameter of 30cm.

Pedestal Length: Referring to Figure 4, a displacement exceeding 2mm in the contour of a line is potentially resolvable at 100m (based on vernier acuity of 4″ of arc at the eye). This break arises as a result of parallax between the line segment on the spacecraft hull 10 and that on the head 16 of the pedestal 14. The displacement will depend on the angular deviation, $\alpha$, of an approaching spacecraft from the centreline of the pedestal 14 and the length, l, of the pedestal. To detect the maximum allowable lateral offset, d, (20cm at 100m) the minimum pedestal length must be 96cm, i.e. approximately one metre. This assumes naked eye vision.

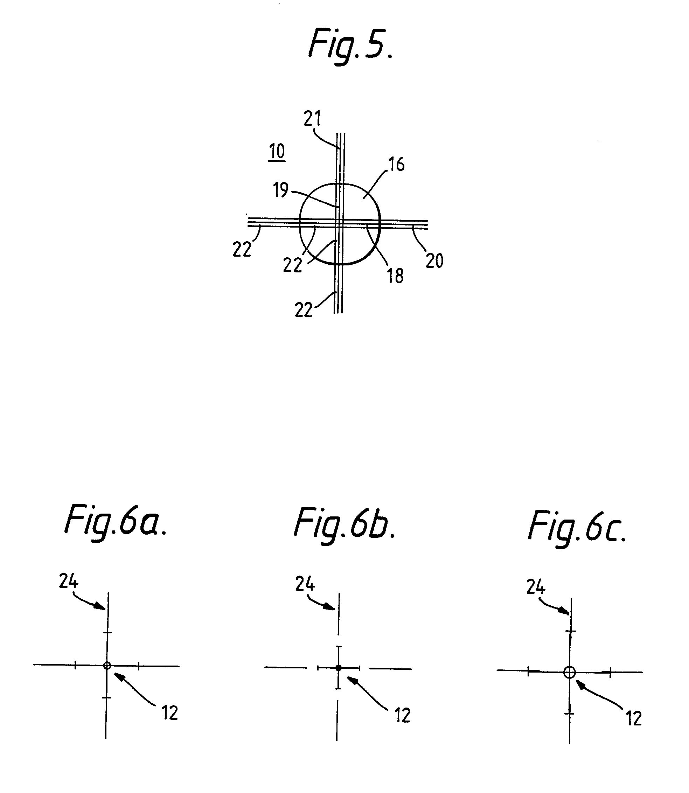

In use, the target 12 may be in partial or full shadow or in direct sunlight. This means that the contrast of a single line cannot be determined let alone optimised. Referring to Figure 5, one solution to this general problem would be to flank dark target lines with self-luminous flanking bars so that adequate contrast could be provided by ambient light (reflected) when available or by emitted light. A possible alternative would be to flank the target lines with retroreflective bars to be illuminated from the chaser craft. This solution would be preferable to flanking a luminous strip with dark bars under conditions of either extremely high or very low illumination.

Lighting is a potentially serious problem in spacecraft docking, as extremely deep shadows are cast. The use of luminous flanking bars will allow the target 12 to be seen whether it is in full light or complete darkness. The shadows cast by the pedestal 14 itself under oblique lighting conditions could still conceivably provide a problem, but as there is redundancy in the target configuration (two vernier offsets are giving the same information in each case, as the target is + shaped rather than L shaped) this can never actually disrupt the task.

There may be problems in implementing a 30cm head 16 mounted on a 1m pedestal 14. The maximum displacement of 20cm at l00m is also only detectable as a threshold. In angular terms, accuracy will also decrease at short ranges when the pedestal length becomes a significant proportion of the distance between the chaser and target craft whereupon the line width on the elevated portion of the target 12 will no longer match that on the hull 10. The sensitivity can be increased by employing a longer pedestal or by optical magnification. It is assumed that engineering considerations will require the pedestal to be as small as possible, especially in view of the fact that the alignment of the pedestal itself is critical.

However, the foregoing argument assumes unaided vision whereas in practice a boresighted camera system with reticle may be used to advantage on the chaser spacecraft. The image quality decrement and geometrical problems referred to above can be more than compensated for by an optical magnification on this system. At 100m a magnification of *10 gives a minimum target elevation of 10cm and width of 3cm with a line width of 0.3cm, (larger values could still improve accuracy). This magnification would not be required as the range to the target decreases so a zoom lens could be used so that the magnification falls to unity at short range (range information should be available to the operator). The target can thus be maintained at an approximately constant size on the operator's display, so that a reticle can be devised which does not intrude on the docking target 12. The required magnification can be derived from the relative size of the reticle and target pattern so that a constant indication of the optimum focal length is provided.

Figures 6a-c show the use of a reticle 24 at different docking magnifications of the docking target 10. Figure 6a represents the correct magnification in which case the docking target 12 fits neatly inside the lines of the reticle 24. Figure 6b represents a magnification which is too low and Figure 6c represents a magnification which is too high.

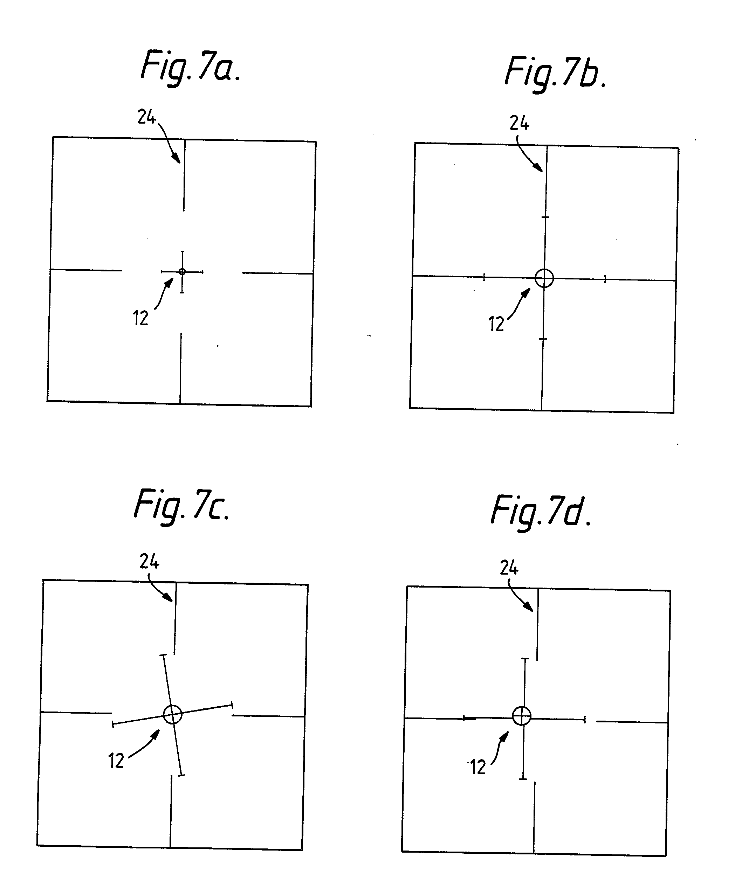

In use, the operator in a chaser spacecraft which is approaching the spacecraft 10 should coarsely line up the target 12 at low magnification so that it is in the centre of the field of view as is shown in Figure 7a. The operator should then increase magnification so that the target 12 is positioned within the reticle 24 as shown in Figure 7b. The orientation and the relative position of the reticle 24 and the docking target 12 should then be maintained and the magnification lowered as the range decreases e.g. by coupling the viewing system to a range finder. Eventually, at close range the magnification will be unity.

A visible raster on the display will interfere with the perception of line orientation and vernier offset, especially for line elements which are nearly parallel with the raster. Therefore the display should be viewed at such a distance that any structure not relevant to the task is not resolved.

The present invention thus exploits the vernier acuity of human vision to increase the accuracy of alignment between two articles during a docking procedure. In combination with a bore sighted reticle on the chaser craft and variable magnification facilities, optimum accuracy can be achieved. Attitude information is provided by the relative position of the reticle and the lines on the docking target and the angular deviation from the desired approach position (i.e. along an imaginary line extending outwardly from the centre of the target) is given by the parallax within the docking target.

The drawings show a pedestal with a circular head but it should be understood that other head shapes may be employed. The pedestal itself will usually be designed so that its sides are not visible from the front and may for example diverge in diameter as it extends away from the spacecraft hull.

It is envisaged that contour edges may be used instead of, or together with, specially provided lines on a docking target in connection with the present invention. Conceivably, the docking target could be a sunken arrangement rather than an elevated target although lighting problems would then have to be overcome.

The invention is not limited to spacecraft but could also be applied in other docking maneouvres e.g. involving aircraft or ships or underwater tasks.

The present invention has been described with reference to the visual capabilities of a human operator, but it should be understood that the invention embraces a machine counterpart should one of sufficient visual capabilities be developed.

## Claims

1. A docking target, adapted to form part of an article adapted for docking connection with a further article, the docking target having first and second portions at different levels and configured so that an observer associated with the further article aims to align a line or contour on the first portion with a line or contour on the second portion during a docking maneouvre.

2. A docking target according to Claim 1 comprising a projection adapted to extend from the body of the article wherein the first portion is at the end of the projection and the second portion is in the region of the base of the projection.

3. A docking target according to Claim 1 or Claim 2 wherein the difference between said different levels is approximately 1 metre.

4. A docking target according to any preceding claim wherein the length of the line or contour on the first portion is of the order of 0.3 metre.

5. A docking target according to any preceding claim comprising luminous and/or retroreflective material flanking the lines or contours on the first and second portions.

6. A docking target according to any preceding claim comprising perpendicular lines marked on the first and second portions.

7. An article comprising a docking target according to any preceding claim.

8. A viewing system for use in a further article adapted for docking conection with an article comprising a docking target as defined in any preceding claim, the viewing system having means for magnifying the docking target and means for gradually reducing said magnification as the articles approach one another.

9. A viewing system according to Claim 8 comprising a reticle comprising perpendicular lines for alignment with perpendicular lines on the docking target.

10. An article comprising a viewing system as claimed in Claim 8 or Claim 9.

Fig.1.

Fig.2.

Fig.3a.

Fig.3b.

Fig.3c.

Fig.4.

# Fig.5.

# Fig.6a.

# Fig.6b.

# Fig.6c.

**Fig.7a.**

**Fig.7b.**

**Fig.7c.**

**Fig.7d.**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 910 533  (CHEATHAM et al.) <br> * Whole document * | 1,2,6-10 | B 64 G   1/64 <br> G 01 B  11/27 |
| Y | | 5 | |
| A | | 3,4 | |
| | --- | | |
| Y | MECHANICAL ENGINEERING, vol. 91, no. 5, May 1969, page 85, new York, US; ""A" Eye aids space linkup" <br> * Whole article * | 5 | |
| | --- | | |
| A | FR-A-2 569 838 (MESSERSCHMITT-BOLKOW-BLOHM GmbH) <br> * Page 3, line 25 - page 6, line 2; claims; figures * | 1-5 | |
| | ----- | | |

TECHNICAL FIELDS SEARCHED (Int. Cl.4)

B 64 G
F 41 G
G 01 B
B 25 J

The present search report has been drawn up for all claims

| Place of search | Date of completion of the search | Examiner |
|---|---|---|
| THE HAGUE | 17-02-1989 | ESTRELA Y CALPE J. |